(19) Europäisches Patentamt
European Patent Office
Office européen des brevets

(11) Veröffentlichungsnummer : **0 110 158 B1**

(12) **EUROPÄISCHE PATENTSCHRIFT**

(45) Veröffentlichungstag der Patentschrift :
07.05.86

(51) Int. Cl.⁴ : **B 60 Q   1/04**

(21) Anmeldenummer : 83110814.7

(22) Anmeldetag : 28.10.83

(54) **Scheinwerfer für Kraftfahrzeuge.**

(30) Priorität : 27.11.82 DE 3243990

(43) Veröffentlichungstag der Anmeldung :
13.06.84 Patentblatt 84/24

(45) Bekanntmachung des Hinweises auf die Patenterteilung : 07.05 86 Patentblatt 86/19

(84) Benannte Vertragsstaaten :
FR GB IT NL SE

(56) Entgegenhaltungen :
DE-A- 2 935 367

(73) Patentinhaber : **Westfälische Metall Industrie KG Hueck & Co.**
**Postfach 28 40**
**D-4780 Lippstadt (DE)**

(72) Erfinder : **Ewert, Alfred**
**Mercklinghausstrasse 88**
**D-4780 Lippstadt (DE)**

**Beschreibung**

Die Erfindung bezieht sich auf einen Scheinwerfer für Kraftfahrzeuge mit mindestens einer dessen Reflektor verstellenden Einrichtung, die ein mittels einer Schraube in einer Nut des Scheinwerfergehäuses verschiebbares Führungsteil hat, an dem der Reflektor angelenkt ist. Derartige Verstelleinrichtungen sind in der DE-U-80 18 010 und DE-U-77 02 874 offenbart. Bei der Verstelleinrichtung gemäß der DE-U-77 02 874 wird die Verstellschraube von der Vorderseite des Scheinwerfers und bei der Einstellvorrichtung gemäß der DE-U-80 18 010 wird die Einstellschraube von der Rückseite des Scheinwerfers betätigt. Bei der ersten Ausführungsform muß der Karosserieausschnitt wesentlich größer gewählt sein als die Streuscheibe, da die Köpfe der Einstellschrauben neben der Streuscheibe angeordnet sind. Eine solche Scheinwerferausführung ist in vielen Fällen nicht möglich, da der Platz neben den Scheinwerfern durch andere Aggregate, wie z. B. Blinkleuchte und Kühlergrill, eingeengt ist. Eine Einstellung von der Rückseite des Scheinwerfers ist oft wegen der recht engen Einbauverhältnisse im Motorraum nicht oder nur unter Eingehung von Kompromissen möglich.

Aus diesem Grunde wurden in der Praxis bereits Scheinwerfer eingeführt, bei denen die Einstellung des Reflektors von der Oberseite des Scheinwerfers erfolgt, wobei zur Abwinkelung der Verstellkräfte und der Verstellwege eine Zahnradübertragung, ähnlich wie sie in der DE-A-24 37 572 gezeigt ist, eingebaut ist.

Weiterhin ist bereits bekanntgeworden, die Einstellschraube mit dem einen Ende einer flexiblen Welle zu koppeln und das andere Ende der flexiblen Welle an einer beliebigen Stelle anzuordnen. Eine solche in der DE-A-840 232 gezeigte Ausführungsform der Verstelleinrichtung ist nicht nur aufwendig in ihrem Aufbau und umständlich in der Montage, sondern sie hat darüber hinaus auch noch den großen Nachteil der Ungenauigkeit, weil in der biegsamen Welle häufig eine nicht zu vernachlässigende Hysterese auftritt. Der gleiche Nachteil tritt bei einer Verstelleinrichtung auf, die, wie in der DE-A-20 38 444 dargestellt, durch einen Bowdenzug betätigt wird.

Aufgabe der Erfindung ist es, eine eingangs geschilderte Verstelleinrichtung für Kraftfahrzeugscheinwerfer derart auszugestalten, daß die Richtung der Längsachse der Einstellschraube weitestgehend unabhängig ist von der Verstellrichtung des Reflektors. Dabei soll sich weder die Anzahl der Einzelteile der Verstelleinrichtung erhöhen noch soll die Verstelleinrichtung in Aufbau, Montage und Funktionssicherheit schlechter sein als die vorbekannten. Diese Aufgabe wird erfindungsgemäß dadurch gelöst, daß das Führungsteil zwei Endabschnitte aufweist, die durch einen leicht biegsamen Mittelabschnitt verbunden sind, daß die beiden Endabschnitte in winkelig zueinander verlaufenden Nuten gelagert sind und daß der biegsame Mittelabschnitt in einer zwischen diesen beiden Nuten angeordneten bogenförmig verlaufenden Nut geführt ist. Die Größe des Winkels kann je nach Scheinwerferkonstruktion zwischen 0° und 180° liegen. Eine vorteilhafte Anwendung wird sich jedoch in der Regel bei einem Winkel von etwa 90° ergeben.

Bei einem vorteilhaften Ausführungsbeispiel der Erfindung ist das aus mehreren Abschnitten bestehende Führungsteil einteilig aus Kunststoff hergestellt. Dabei wird der mittlere elastische Abschnitt aus einer dünnen Lasche gebildet, die hochkant in die bogenförmig verlaufende Nut eingesetzt ist. Ein solches Führungsteil wird wie die bekannten Führungsteile im Spritzgießverfahren hergestellt. Da es durch die Führungsnuten in seiner Steifigkeit unterstützt wird, sind keine zusätzlichen Versteifungsrippen oder andere der Versteifung dienenden Wandabschnitte erforderlich. Es ist trotz der Umlenkfunktion noch einfacher in der Ausgestaltung als die bekannten Führungsteile.

Bei einer weiteren vorteilhaften Ausgestaltung der Erfindung ist der an den Reflektor angelenkte Endabschnitt des Führungsteils auf der einen und der mit der Schraube gekoppelte Endabschnitt auf der anderen Breitseite des laschenförmigen Mittelabschnitts angeordnet. Dieses hat den Vorteil, daß selbst bei einem großen Krümmungsradius in der bogenförmigen Nut die im Winkel zueinander verlaufenden Schenkel des eingesetzten Führungsteils sehr kurz sein können.

Weiterhin von Vorteil ist, daß die dem laschenartigen Mittelabschnitt gegenüberliegende Führungsfläche zumindest des an den Reflektor angelenkten Abschnitts des Führungsteils durch ein angeformtes dünnes Wandungsteil verlängert ist. Damit gibt dieser Abschnitt des Führungsteils dem Reflektor selbst bei einem geringen Spiel zwischen diesem Abschnitt des Führungsteils und der entsprechenden Nut einen ausreichend genauen Sitz.

Die Führungsnuten werden von dünnwandigen, an das Scheinwerfergehäuse angebrachten Stegen oder von diesen im Zusammenwirken mit der Scheinwerferwandung gebildet. Dabei ist das Scheinwerfergehäuse aus Kunststoff hergestellt und die die Nuten bildenden Stege sind unmittelbar angeformt. Vorteil dieser Ausführungsform ist, daß keine besonderen Arbeitsgänge zur Schaffung der das Führungsteil aufnehmenden Nuten erforderlich sind.

Zweckmäßigerweise ist an den einen Abschnitt des Führungsteils ein Bolzen mit Kugelkopf angebracht, der das gelenkige Verbindungsglied mit dem Reflektor bildet. Dadurch ist sichergestellt, daß bei Verschiebung des in den Nuten geführten Führungsteils der Reflektor beim Verschwenken nicht deformiert wird, sondern die Winkeländerung zwischen Reflektor und dem Führungsteil durch ein Gelenk ausgeglichen wird. Der mit dem Kugelkopf versehene Bolzen kann mit dem Führungsteil einteilig hergestellt sein.

Die Zeichnung veranschaulicht ein vorteilhaftes Ausführungsbeispiel der Erfindung, und zwar zeigt

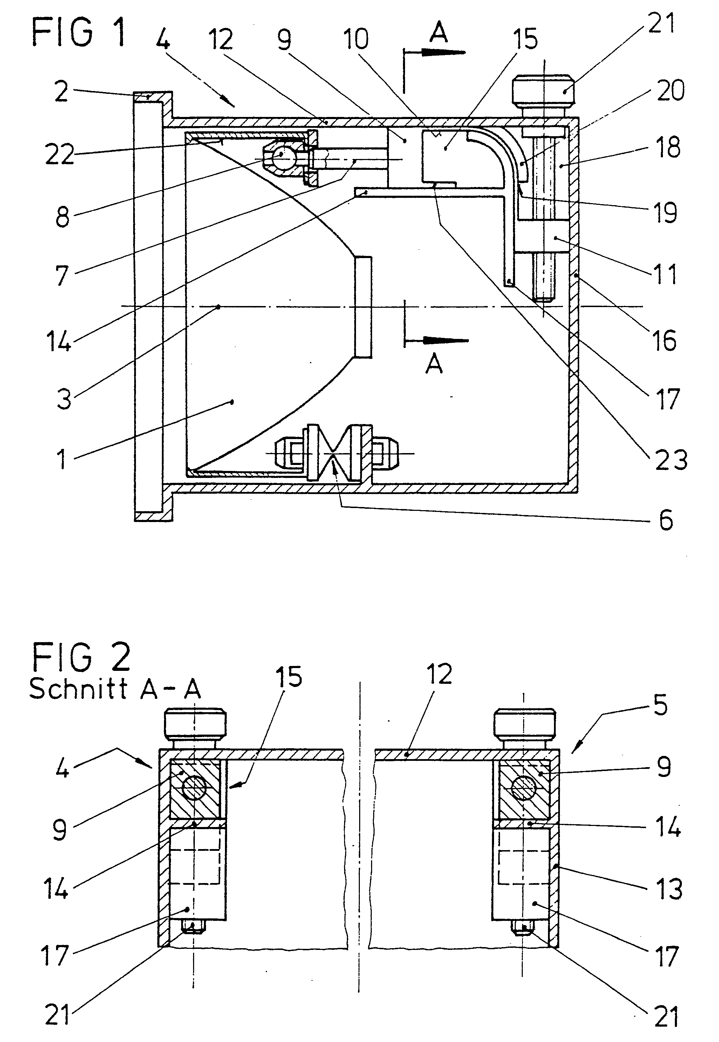

Figur 1 eine Ansicht in das ausgeschnittene Scheinwerfergehäuse von der Seite und

Figur 2 einen Teilschnitt nach der Linie A-A.

Der Reflektor 1 ist um zwei im wesentlichen senkrecht aufeinanderstehende Achsen verschwenkbar in dem aus Kunststoff hergestellten Gehäuse 2 gelagert. Dazu weist der Reflektor in seinem oberen Bereich zwei in Richtung der Achse 3 verstellbare Befestigungspunkte 4 und 5 und in dem unteren Teil einen ortsfesten, unterhalb eines der beiden Befestigungspunkte 4 und 5 angeordneten Schwenkpunkt 6 auf. In den Befestigungspunkten 4 und 5 wird der Reflektor von einem Bolzen 7 getragen, der über ein Kugelgelenk 8 mit dem Reflektorrand 22 verbunden ist. Der Bolzen 7 ist entweder einteilig mit dem Führungsteil 9, 10, 11 hergestellt, oder er ist mit einem Preßsitz in den Abschnitt 9 des Führungsteils eingesetzt.

Das Führungsteil besteht aus den beiden Endabschnitten 9 und 11 sowie aus dem Mittelabschnitt 10. Der Mittelabschnitt 10 ist als flache Lasche ausgeführt und bildet mit den Endabschnitten 9, 11 eine Einheit. Der Endabschnitt 9 des Führungsteils ist in eine von den Wandungsteilen 12 und 13 sowie von dem Steg 14 des Gehäuses gebildete Führungsnut 15 eingesetzt. Der Endabschnitt 11 des Führungsteils ist in eine von den Wandungsteilen 16 und 13 sowie von dem Steg 17 des Gehäuses 2 gebildeten Führungsnut 18 eingesetzt. Der mittlere Teilabschnitt 10 ist hochkant in eine die beiden vorstehend genannten Nuten 15 und 18 verbindende bogenförmige und von den Rippen 17 und 20 gebildete Nut 19 eingesetzt.

Das Führungsteil 9, 10, 11 ist mit soviel Spiel in die zugehörigen Nuten 15, 18, 19 eingesetzt, daß es leicht, jedoch möglichst mit geringem Spiel gleitet.

In den Endabschnitt 11 des Führungsteils greift eine in die Gehäusewandung 12 eingesetzte Verstellschraube 21 ein und verstellt je nach Drehrichtung den Endabschnitt 11 des Führungsteils nach oben oder nach unten. Dabei wird der über den laschenartigen biegsamen Mittelabschnitt 10 mit dem Endabschnitt 11 verbundene andere Endabschnitt 9 horizontal verschoben und verstellt dabei über den Bolzen 7 den Reflektor 1.

Durch die Zwangsführung des Führungsteils 9, 10, 11 erreicht man eine direkt ansprechende und ohne Hysterese arbeitende Einstellvorrichtung, die von der Oberseite der Scheinwerfer leicht zu handhaben ist.

Der Endabschnitt 9 des Führungsteils gibt dem Reflektor 1 seine genaue Position und muß auch für eine schwingungsfreie Lagerung sorgen. Um dieses zu gewährleisten, ohne daß der Endabschnitt klobig und damit schwer gießbar ausgeführt ist, weist dieser Abschnitt einen von dem Reflektor wegweisenden und in die Nut hineinweisenden dünnen Wandungsteil 23 auf, der die Gleitfläche zwischen der Rippe 14 und dem Endabschnitt 9 vergrößert. Die Vergrößerung der Gleitfläche verhindert ein Kippen des Endabschnitts 9 des Führungsteils und gibt somit dem Reflektor einen sicheren Halt. Gleiches kann selbstverständlich mit dem Endabschnitt 11 erfolgen. Es ist jedoch an die Qualität der Führung des Endabschnitts 11 in der Nut 18 keine so hohe Anforderung zu stellen, wie an die Qualität der Führung für den Endabschnitt 9.

Die Nuten 15 und 18 können auch gebildet werden durch die Stege 14, 17 sowie durch weitere Stege, die die Wandungsteile 12, 16 ersetzen.

## Patentansprüche

1. Scheinwerfer für Kraftfahrzeuge mit mindestens einer dessen Reflektor (1) verstellenden Einrichtung, die ein mittels einer Schraube (21) in einer Nut (18) des Scheinwerfergehäuses verschiebbares Führungsteil (11) hat, an dem der Reflektor angelenkt ist, dadurch gekennzeichnet, daß das Führungsteil zwei Endabschnitte (9, 11) aufweist, die durch einen leicht biegsamen Mittelabschnitt (10) verbunden sind, daß die beiden Endabschnitte (9, 11) in winkelig zueinander verlaufende Nuten (15, 18) gelagert sind und daß der biegsame Mittelabschnitt (10) in einer zwischen diesen beiden Nuten (15, 18) angeordneten bogenförmig verlaufenden Nut (19) geführt ist.

2. Scheinwerfer nach Anspruch 1, dadurch gekennzeichnet, daß das aus mehreren Abschnitten (9, 10, 11) bestehende Führungsteil einteilig aus Kunststoff hergestellt ist.

3. Scheinwerfer nach Anspruch 2, dadurch gekennzeichnet, daß der mittlere elastische Abschnitt (10) aus einer dünnen Lasche gebildet ist, die hochkant in die bogenförmig verlaufende Nut (19) eingesetzt ist.

4. Scheinwerfer nach Anspruch 3, dadurch gekennzeichnet, daß der an den Reflektor (1) angelenkte Endabschnitt (9) des Führungsteils auf der einen und der mit der Schraube (21) gekoppelte Endabschnitt (11) auf der anderen Breitseite des laschenförmigen Mittelabschnitts (10) angeordnet ist.

5. Scheinwerfer nach Anspruch 2, dadurch gekennzeichnet, daß die dem laschenartigen Mittelabschnitt (10) gegenüberliegende Führungsfläche zumindest des an den Reflektor (1) angelenkten Abschnitts (9) des Führungsteils durch ein angeformtes dünnes Wandungsteil (23) verlängert ist.

6. Scheinwerfer nach einem der vorstehenden Ansprüche, dadurch gekennzeichnet, daß die Nuten (15, 18, 19) von dünnwandigen, an das Scheinwerfergehäuse angebrachten Stegen (14, 17, 20) gebildet werden.

7. Scheinwerfer nach Anspruch 6, dadurch gekennzeichnet, daß das Scheinwerfergehäuse (2) aus Kunststoff hergestellt ist und die zusammen mit Scheinwerferwandungsteilen die Nuten (15, 18, 19) bildenden Stege (14, 17, 20) unmittelbar mit angeformt sind.

8. Scheinwerfer nach einem der vorstehenden Ansprüche, dadurch gekennzeichnet, daß an den einen Abschnitt (9) des Führungsteils ein Bolzen (7) mit Kugelkopf (8) angebracht ist, der das gelenkige Verbindungsglied (5) mit dem Reflektor (1) bildet.

9. Scheinwerfer nach Anspruch 8, dadurch gekennzeichnet, daß der Bolzen (7) mit Kugelkopf (8) mit dem Führungsteil (9, 10, 11) einteilig hergestellt ist.

## Claims

1. Headlamp for motor vehicles, with at least one device which adjusts the reflector (1) of the said headlamp and which has a guide element (11) displaceable by means of a screw (21) in a groove (18) of the headlamp housing, the reflector being pivotably connected to this guide element, characterised in that the guide element comprises two end portions (9, 11) which are connected by a readily flexible central portion (10), that the two end portions (9, 11) are mounted in grooves (15, 18) extending at an angle to one another, and that the flexible central portion (10) is guided in an arcuate groove (19) arranged between these two grooves (15, 18).

2. Headlamp according to claim 1, characterised in that the guide element comprising a plurality of portions (9, 10, 11) is made in one piece from synthetic plastic material.

3. Headlamp according to claim 2, characterised in that the central elastic portion (10) is formed of a thin strap inserted on-edge in the groove (19) which has an arcuate shape.

4. Headlamp according to claim 3, characterised in that that end portion (9) of the guide element which is pivotably connected to the reflector (1) is situated at one broad side and the end portion (11) connected to the screw (21) is situated at the other broad side of the strap-form central portion (10).

5. Headlamp according to claim 2, characterised in that that guide surface of at least the guide element portion (9) pivotably connected to the reflector (1) which is opposite the strap-form central portion (10) is prolonged by a formed-on thin wall portion (23).

6. Headlamp according to one of the preceding claims, characterised in that the grooves (15, 18, 19) are formed by thin-walled webs (14, 17, 20) arranged on the headlamp housing.

7. Headlamp according to claim 6, characterised in that the headlamp housing (2) is made from synthetic plastic material, and the webs (14, 17, 20) which, together with wall portions of the headlamp, form the grooves (15, 18, 19), are directly moulded-on in the moulding operation.

8. Headlamp according to one of the preceding claims, characterised in that a pin (7) with a spherical head (8) forming the pivotal connection element (5) pivotably connecting with the reflector (1) is arranged on one portion (9) of the guide element.

9. Headlamp according to claim 8, characterised in that the pin (7) with the spherical head (8) is made in one piece with the guide element (9, 10, 11).

## Revendications

1. Projecteur pour véhicules automobiles, avec au moins un dispositif réglant son réflecteur (1), ce dispositif ayant une partie guidage (11) qui peut être déplacée au moyen d'une vis (21) dans une rainure (18) du boîtier du projecteur, le réflecteur étant articulé sur cette partie guidage, caractérisé en ce que la partie guidage présente deux portions terminales (9, 11) qui sont reliées par une portion médiane (10) facilement flexible, en ce que les deux portions terminales (9, 11) ont leur portée dans des rainures (15, 18) dont les tracés forment mutuellement un angle, et en ce que la portion médiane flexible (10) est guidée dans une rainure (19) à tracé en forme d'arc agencée entre ces deux rainures (15, 18).

2. Projecteur selon la revendication 1, caractérisé en ce que la partie guidage constituée de plusieurs portions (9, 10, 11) est réalisée d'une seule pièce en matière plastique.

3. Projecteur selon la revendication 2, caractérisé en ce que la portion élastique médiane (10) est formée d'une mince attache qui est insérée de chant dans la rainure (19) à tracé en forme d'arc.

4. Projecteur selon la revendication 3, caractérisé en ce que la portion terminale (9) de la partie guidage, articulée sur le réflecteur (1), et la portion terminale (11) couplée à la vis (21) sont agencées respectivement sur le premier et sur l'autre côté large de la portion médiane (10) en forme d'attache.

5. Projecteur selon la revendication 2, caractérisé en ce que, située en vis-à-vis de la portion médiane (10) du genre attache, la surface de guidage d'au moins la portion (9) de surface de guidage articulée sur le réflecteur (1) est prolongée par une mince partie de paroi (23) formée sur elle.

6. Projecteur selon l'une des revendications précédentes, caractérisé en ce que les rainures (15, 18, 19) sont formées par des âmes à mince paroi (14, 17, 20) agencées sur le boîtier du projecteur.

7. Projecteur selon la revendication 6, caractérisé en ce que le boîtier (2) du projecteur est réalisé en matière plastique et en ce que les âmes (14, 17, 20) qui, en combinaison avec les parties de paroi du projecteur, forment les rainures (15, 18, 19), sont directement formées avec et sur lui.

8. Projecteur selon l'une des revendications précédentes, caractérisé en ce qu'est agencée, sur la première portion (9) de la partie guidage, une tige (7) qui est dotée d'une tête sphérique (8) et qui forme l'organe de liaison articulé (5) avec le réflecteur (1).

9. Projecteur selon la revendication 8, caractérisé en ce que la tige (7) avec tête sphérique est réalisée d'une seule pièce avec la partie guidage (9, 10, 11).

FIG 1

FIG 2
Schnitt A - A